# EUROPEAN PATENT SPECIFICATION

(11) **EP 0 760 209 B1**
(45) Date of publication and mention of the grant of the patent: **21.11.2001**
(21) Application number: 95113866.8
(22) Date of filing: 04.09.1995
(51) Int. Cl.: A21D 8/04, A21D 13/08

(54) **Method of manufacturing baked products**
Verfahren zur Herstellung von Backwaren
Méthode pour la production de produits de boulangerie

(43) Date of publication of application: 05.03.1997
(73) Proprietor: Ajinomoto Co., Inc., Tokyo 104 (JP)
(72) Inventor: Kuraishi, Chiya, c/o Food Res. & Dev. Laboratories, Kawasaki-ku, Kawasaki-shi, Kanagawa-ken (JP); Ishii, Chiho, c/o Food Res. & Dev. Laboratories, Kawasaki-ku, Kawasaki-shi, Kanagawa-ken (JP); Soeda, Takahiko, c/o Food Res. & Dev. Laboratories, Kawasaki-ku, Kawasaki-shi, Kanagawa-ken (JP)
(74) Representative: Strehl Schübel-Hopf & Partner

(56) References cited:
- EP-A- 0 492 406
- DATABASE WPI Section Ch, Week 9548 Derwent Publications Ltd., London, GB; Class D11, AN 95-370416 & JP-A-07 250 609 ( AJINOMOTO KK) , 3 October 1995
- PATENT ABSTRACTS OF JAPAN vol. 018 no. 597 (C-1273) ,15 November 1994 & JP-A-06 225717 (AJINOMOTO CO INC) 16 August 1994,

## Description

### Field of the Invention

The present invention relates to a method of manufacturing baked products mainly comprising flour and also containing fat with a multilayered or porous structure. Particularly, the present invention relates to a method of manufacturing pastries, tarts, danish pastries, etc., by allowing transglutaminase (hereinafter referred to as "TGase") to exert its action on flour dough.

The present invention can prevent dough from softening, thus improve productivity, manufacture final products giving crispy and flaky feeling when eaten, maintain crispiness for a longer period of time, and further, in the case of multilayered products, improve the lift of layers.

### Prior Art

Representative examples of baked products mainly comprising flour with a multilayered or porous structure due to containment of fat are so-called pie pastries. Pie pastries are made by baking solid-fat rich dough and generally made of flour, water, salt, solid fat, and if required, egg, milk, sugar, and other additives.

Then, pie pastries are principally classified into (1) puff pastry, in which layers of fat are interleaved between layers of dough and (2) pie crusts(flaky crusts, mealy crust) in which dough contains finely divided fat. Both are characterized by their good flavor and crispiness just after baking and they are representative bakery's products favored by everyone.

Other examples of baked products mainly comprising flour which also comprise fat so as to take a multilayered or porous structure include croissants and danish pastries, which have structures similar to that of pie pastry, but which are produced from fermentation dough containing yeast in addition to flour. Although they can be classified as bread, they also possess similar characteristics to those required for pie pastry as mentioned above in that they contain large amounts of fat and are characterized by sufficient lift of laminated layers and flakiness at eating.

The above-mentioned pie pastry, croissants and danish pastries, are either enjoyed as they are, or are widely accepted in such forms being filled with fillings such as fruit, jam and sauce or alternatively they can be combined with other bakery dough such as dough for sponge cake or butter cake.

In any case, the most important characteristic required for baked products made of grain powder which contain fat to have a multilayered or porous structure is crispiness and flakiness which they give at eating.

The composition ratio of fat to flour in pie pastry, croissants, danish pastries, etc., is higher than that in other bakery products, namely 30% or higher in general, and 50% or higher for most products. It is required to pay attention to thermal control during operation so as not to melt fat. When fat melts, it oozes out and as a result fat layers (or finely divided fat) are not appropriately inserted in the dough. Such products have a drawback in that they lack not only the required multilayered or porous structure but also lack crispiness at eating and their product value is reduced significantly.

Particularly in the case of dough in which flour layers and fat layers are laminated, handling of fat is further difficult, since large amounts of fat are used, layers mostly consisting of fat are wrapped between spread flour dough layers, and sheeting and folding operations are repeated. If fat is melted and oozed out from flour dough layers, or if fat layers are formed only unevenly, less potential lift can be attained for products and apparently continuous layers are not formed. These are great drawbacks for products.

The other problem concerning pie pastry and danish pastries, solution of which has been desired, is a loss of crispiness due to transfer of water. These products which are often combined with filling materials such as meats and fruits and fillings such as jams and creams, often lose their crispiness by transfer of water, resulting in reduced value of the products. This is a problem to be solved.

As a means to improve crispiness of baked products mainly comprising flour and also containing fat to give a multilayered or porous structure it has been proposed (Published Unexamined Patent Application JP-A-61-260830 that a lower crust layer consisting of pie dough is added to an upper crust layer consisting, for example, of pizza dough to retain crispness of the lower pie layer even when water is penetrated into the upper pizza layer. This invention, however, does not fundamentally solve the problem of water transfer and does not change wet feeling when eating the upper pizza layer.

A method of forming a coating by applying edible oil on a surface of crust (Published Unexamined Patent Application JP-A-2-150231) and a method of providing a water-proof layer comprising aceto-fat between a puff pastry layer and a filling layer (Published Unexamined Patent Application JP-A-5-103581) have been proposed. Since a remarkable amount of fat is required to maintain crispiness at eating, however, such a new problem arises that excessive amounts of fat may deteriorate the feeling at eating.

EPA-0 492 406 discloses a method for the preparation of baked products, wherein the elasticity of the dough and the crumb structure are improved due to the addition of transglutaminase. Transglutaminase is added to the flour dough and allowed to exert its action on the dough. Thereafter, the transglutaminase is inactivated by baking the dough.

### Problems to be Solved by the Invention

The present inventors noticed, as a result of intensive research to solve the problems as mentioned above, that transglutaminase (abbreviated as TGase hereinbelow) catalyzes an acyl transfer reaction between γ-carboxyamide group of glutamine residue in protein or peptide chains and primary amine, to form an ε-(γ-Glu)-Lys crosslinkage when the primary amine is a lysine residue of protein. As a result, we found a novel manufacturing method which enables the maintenance of favorable crispiness at eating for a longer period of time and by which, even when filling materials and fillings are used in combination, indigenous feeling of products at eating is not damaged by the water contained in them. This method comprises adding TGase to dough mainly comprising of flour and allowing it to exert its action to form linkages among proteins.

Furthermore, in the case of products in which flour layers and fat layers are laminated, since the strength of flour dough was enhanced by the action of TGase, the dough did not break after repeated folding operations, and thin and even fat layers of oil were formed between the flour layers without oozing out. As a result, crispy products which consist of more laminates, have significant potential lift and display a fine appearance are obtained. The texture is tender and flaky, not gummy, heavy or soggy.

Namely, the present invention provides (1) a method of manufacturing baked products with a multilayered structure characterized in that transglutaminase is added to flour dough and allowed to exert its action on it followed by heat treatment in a composite in which dough layers mainly comprising flour and separate layers mainly comprising fats and oils are laminated; and (2) a method of manufacturing baked products with a porous structure characterized in that transglutaminase is added to flour dough and allowed to exert its action on it followed by heat treatment in a composite in which finely divided fat is mixed into dough layers mainly comprising flour. The present invention is described in detail below.

Firstly, "dough mainly comprising flour" used in the present invention generally comprises flour, water (milk may be used in some cases), salt, and, if required, oils and fats, egg, sugar and additives. In addition, the dough mainly comprising flour includes dough containing yeast.

Any flour may be used in the present invention without restriction, for example, commercially available hard flour, medium flour and soft flour may be used alone or in combination of two or more of them. And grain powder except flour may be added, if required. Whole egg, yolk or albumen may be used alone or in combination. Any additives, use of which in food has been approved in general, may be used, including vanilla essence, liquors, yeast food, colorants, emulsifiers, and preservatives.

There is no particular restriction on fat used in the present invention. Butter, roll-in margarine, shortening, and other solid fat are usually used.

Multilayered or porous baked products of flour containing fat manufactured according to the present invention include, of course, two types of pie pastry, puff pastry (pies with a multilayered structure) and pies crust (flaky crust and mealy crust), as well as bakeries such as croissants and danish pastries which are manufactured using flour dough containing yeast in a way similar to that used for puff pastry.

The embodiment of the invention (1) mentioned above is a method of manufacturing baked products represented by so-called puff pastry, in which dough mainly comprising of flour and fat layers are combined, sheeted, and subjected to repeated folding operations to form a laminate consisting of thin flour dough layers and thin fat layers. After cutting into desired shapes and baking, space is provided between layers and the well-defined laminates to give a particular appearance were formed. Among others, greatly lifted and multilayered products such as apple pies are mentioned as representatives.

The embodiment of the invention (2) mentioned above is a method of manufacturing baked products represented by so-called pie crusts, in which finely divided fat is incorporated in flour dough and melted by baking to create space (a porous structure) in the flour dough to obtain products providing crispy feeling at eating. So-called tarts can be mentioned as representative final products.

When flour dough containing yeast is used, croissants, danish pastries, etc., can be made. These are generally multilayered baked products. As porous baked products, a variety of items included in so-called sweet rolls can be mentioned.

Multilayered or porous flour baked products of the present invention may be combined with other dough, for example, sponge cake dough or butter cake dough, or sauce, jam, and other filling materials may be wrapped in or put on the dough of the present invention to make products.

TGase used in the present invention may be any enzyme with TGase activity, irrespective of its source, for example, TGase derived from microorganisms belonging to the genus Streptoverticillium (abbreviated as BTGase hereinbelow, see Japanese Published Unexamined Patent Application JP-A-1-027471, derived from mammals such as guinea pigs (abbreviated as MTGase, see Published Examined Patent Application JP-B-1-050382, or derived from fish such as cod (see Seki, et al., Proceedings of the Autumn Meeting of the Japanese Association of Fisheries, 1988), those obtained by genetic recombination by means of biotechnology (see Published Unexamined Patent Application JP-A-1-300889). Among others, BTGase is preferable for the following reasons, etc.: it can exert its function even in the absence of calcium and it can be obtained in a large amount.

The TGase is added at a concentration ranging from 0.01 U to 20 U per 1 g of flour protein in general, and preferably 0.02 U - 5 U. At concentrations below 0.01 U, expected effects cannot be attained. On the contrary, at concentrations higher than 20 U, products obtained are too tough and gummy or lose crispiness, and in the case of dough using yeast, rising becomes insufficient. The above-mentioned range is, however, not restrictive, and only for giving standards.

The activity unit of TGase in the present invention is measured and defined as follows. TGase is allowed to react in a reaction mixture containing benzyloxycarbonyl-L-glutamyl glycine and hydroxylamine as substrates in Tris-HCl buffer (pH 6.0) at 37°C, and hydroxamic acid thus produced is then transformed into the iron complex in the presence of trichloroacetic acid. After that, the absorption is measured at 525 nm and the amount of hydroxamic acid is obtained according to the standard curve. The amount of the enzyme which produces 1 µmol of hydroxamic acid in 1 minute is defined as an activity unit of TGase, 1 unit (1U) (see Published Unexamined Patent Application JP-A-1-027471).

A method of adding TGase to dough according to the present invention is described in detail below.

When dough in which flour dough layers and fat layers are laminated (dough with a multilayered structure) is produced, a process in which dough mainly comprising flour and wrapping fat (fat may wrap flour dough) is sheeted and folded repeatedly is used in general. Another method may be used, however, in which fat cut into small pieces is lightly mixed with flour, water is then added to put them together, and folding operation is repeated for several times.

Regardless of the method to be employed, in a process of manufacturing multilayered dough according to the present invention, TGase may be present almost evenly not in fat layers but in the dough mainly comprising flour. For example, TGase may be dissolved in water or milk to be added to dough to make a solution, which solution in turn is mixed into the dough. Furthermore, TGase enzyme preparation powder may be thoroughly mixed with flour and the mixture is then added to the other ingredients to make flour dough. It is needless to say that the method of addition of TGase is not restricted.

When dough in which finely divided fat is present in flour dough (dough with a porous structure) is manufactured, the following methods can be employed: fat cut into small pieces is mixed with flour and then the mixture is admixed with the other ingredients to make dough; and fat previously cut into small pieces is mixed with sugar or a part of flour and the mixture is admixed with the remaining flour, water or milk to form dough, etc.

Regardless of the method to be employed, when pie crusts are manufactured according to the present invention, it is sufficient to incorporate TGase into the dough almost evenly. Methods of addition of TGase are not particularly restricted, although several methods are available, for example, a method in which TGase is dissolved in water or milk and the solution is mixed into dough and a method in which TGase enzyme preparation powder is thoroughly mixed with flour and then the other ingredients are added to it.

Additives may be used concomitantly to enhance the manifestation of the expected effect of the enzyme when TGase is allowed to exert its action on dough according to the present invention.

In order to allow TGase to exert its action on dough according to the present invention, a process in which the dough is left under the reaction conditions for the TGase may be provided after addition of TGase in the whole process. As reaction conditions of TGase, it is appropriate to maintain a temperature in a range between 0° C and 70°C, preferably between 10°C and 50°C, for a duration between 10 minutes and 48 hours, preferably 30 minutes and 2 hours as reaction conditions of TGase.

In the present invention, manufacture may be performed without changing conventional methods and processes including raw materials, with the exception that a step is provided, in which TGase is added and then allowed to react is provided as mentioned above.

The process step in which the enzyme is allowed to exert its action may be newly added to the conventional manufacturing processes or may be included in the resting period ( "retardation" ) conducted in a process manufacturing dough mainly comprising flour.

Multilayered or porous flour baked products of the present invention may be combined with another dough, for example, sponge cake dough or butter cake dough, or sauce, jam, and other filling materials may be wrapped in or put on the dough of the present invention to make products.

Although the flour baked products according to the present invention may be manufactured by cutting into products shape immediately after preparation of dough and baking to make final products, the dough may also be stored and distributed in a refrigerated or frozen form, after its preparation or in the form of shaped products and before baking. The effect of the present invention is, of course, sufficiently exerted in the refrigerated or frozen dough.

Conditions of heat treatment (baking) are not particular, usually at 75 - 300°C for 5 - 100 minutes, preferably 160 - 210°C for 15 - 50 minutes.

Thus, according to the present invention, more crispy or flaky products can be obtained by the mere addition of a simple process in which TGase is added and allowed to exert its action without changing raw materials, additives, and processes conventionally employed.

With respect to dough containing large amounts of fat such as that for pie pastries and danish pastries in general, when the dough is left at a temperature not lower than the melting point of the fat during the process prior to making into the final products, fat melts out or oozes out from the flour dough layers, with the result that the multilayered or porous structure becomes incomplete. When the products are obtained by baking, insufficient lift of layers is attained and crisp feeling is lost in final products. In addition, fat is melted and whole dough becomes softer, leading inferior productivity in making operation.

According to the present invention, however, in dough to which TGase is added and allowed to exert its action, strength of flour dough is enhanced by the action of TGase, so that the dough wraps fat layers or finely divided fat tightly and the fat does not ooze out even when it becomes softer to a certain degree.

The strength of flour-water dough can prevent softening of the whole paste and improves productivity.

Particularly, when TGase is added and allowed to exert its action on products in which (1)flour dough layers and (2)oil and fat layers are laminated, it is possible to form well-defined laminates, wider space is provided between the dough layers, the layers are lifted more greatly as a whole, and products giving a lighter feeling when eaten are obtained as compared with those without TGase.

The present invention is further explained by means of the following examples.

### Example 1: Apple Pie (puff pastry: baked product with a multilayered structure)

The composition of the dough is shown in Table 1 below.

**Table 1:**

| Composition of Dough | |
|---|---|
| Hard flour | 500 g |
| Soft flour | 500 g |
| Salt | 20 g |
| Butter | 930 g |
| Whole egg | 65 g |
| Water | 320 g |

The flour for starting material mentioned above was sifted with TGase (enzyme preparation powder) at 0.1 U/g flour protein for starting material. To the mixture, 100 g of butter was added and mixed while cutting into small pieces. Then, salt, water, and egg were added and the mixture was thoroughly well mixed and made as a mass, which was left to rest at about 10°C for 30 minutes. The remaining butter was sheeted into a square with 1 cm thickness. The rested dough was sheeted 2 times as large as the butter and wrapped the butter. The joint part of the dough was tightly sealed. It was then sheeted into a rectangle with 5 mm thickness by means of a pie-sheeter (or reversible sheeter) and folded into three layers. After leaving to rest at about 10°C for about 1 hour, it was again sheeted into a rectangle with 5 mm thickness and folded into four layers. The procedure was repeated again to obtain layered dough for puff pastry consisting of 144 layers (3×4×3×4). As a control, dough was prepared in a similar way in the absence of TGase.

The dough for puff pastry thus obtained was rolled into about 3 mm thickness and lined in a pie plate, then apple filling was filled in. Next, the pie sheet was covered on the apple filling. The apple pie was baked in an oven heated to 200°C for 40 minutes.

After removing heat roughly, the baked pie was cut into pieces of an appropriate size and subjected to a functional test by 10 panelists (5 males and 5 females). The hardness of pastry, flaky and crispy feeling, favorable texture, favorable flavor, and favorable appearance were evaluated for the pastry by an absolute evaluation. The averages of respective marks were calculated. The results are shown in Table 2 below.

**Table 2:**

| Results of Functional Test | | |
|---|---|---|
| Evaluation Items | Samples | |
| | TGase added | TGase not added (control 1) |
| Hardness of pastry | 1.4 | 0.5 |
| Flakiness and Crispiness of pastry | 1.5 | -0.5 |
| Favorable texture in a whole | 1.7 | 0 |
| Favorable flavor | 1.5 | 1.0 |
| Favorable appearance | 1.2 | 0.5 |

### Standards of evaluation:

- 2:: strong or favorable
- 1:: slightly strong or slightly favorable
- 0:: ordinary
- -1:: slightly weak or slightly unfavorable
- -2:: weak or unfavorable

As the table shows, the pastry with addition of TGase was evaluated as superior in crispiness and favorable. Especially, although the control became soggy due to the water transferred from apple filling, the pastry with addition of TGase maintained "crisp" feeling at eating. With respect to the appearance, the pastry with TGase in which layers were well-defined with sufficient lift was accepted favorably.

### Example 2: Puff pastry: Baked product with a multilayered structure

As in example 1, dough for puff pastry with a multilayered structure of 144 layers was prepared. TGase was added at 0.1 U /g flour protein. For a control pastry, TGase was not added.

The dough was rolled into 3 mm thickness and cut into a rectangle (3 × 6 cm) and baked at 200°C for 12 minutes. After removing heat roughly, the pastry height was measured. Organoleptical property was evaluated by a functional evaluation in a manner similar to that used in example 1. The results are shown in Table 3.

**Table 3:**

| Evaluations on pastry height and organoleptical property | | |
|---|---|---|
| Evaluation Items | Sample | |
| | TGase added | TGase not added (control 1) |
| Pastry height (cm) | 2.8 | 2.2 |
| Hardness of crust | 1.4 | 0.8 |
| Crispiness of crust | 1.9 | 1.0 |
| Favorable texture as a whole | 1.7 | 0.8 |
| Favorable appearance | 1.3 | 0.6 |

### Standards of evaluation:

- 2:: strong or favorable
- 1:: slightly strong or slightly favorable
- 0:: ordinary
- -1:: slightly weak or slightly unfavorable
- -2:: weak or unfavorable

As table 3 shows, the pastry with addition of TGase was lifted more greatly and was clearly superior to the control in its appearance. In this case, there was no loss of crispiness due to water transferred from filling materials, since no wet filling material was used. When the baked pastry was put in a vinyl bag, stored at room temperature for 1 week, and eaten, however, the pastry produced from dough with TGase addition was more "crispy", and the control became slightly soggy and less crispy.

### Example 3: Tart (Pie crust: Baked product with a porous structure)

The composition of the dough is shown in Table 4 below.

**Table 4:**

| Composition of Dough | |
|---|---|
| Soft flour | 500 g |
| Granulated sugar | 97 g |
| Butter (with salt) | 190 g |
| Whole egg | 160 g |

The flour as starting material shown above was sifted with and TGase (enzyme preparation powder) at 5 U/g flour protein for raw material. Butter was cut into cubes of 2 cm and mixed thoroughly with granulated sugar and egg. To this mixture, flour was shifted and then mixed lightly to make a mass. It was mixed slightly on a table by kneading and made into a mass. The procedure was repeated 2 times. The dough thus prepared was left to rest at about 10°C for 1 hour. The rested dough was sheeted into 3mm thickness by means of a pie-sheeter or reversible sheeter and lined in a tart mold with a diameter of 7 cm. Weights were put on it to prevent the dough from floating. It was then baked in an oven heated to 180°C for 20 minutes, removed from the mold after baking and allowed to cool.

As a control, dough was prepared in a similar manner in the absence of TGase.

On the next day of baking, custard cream was filled in the tart base and left for 6 hours. Then, the tart base was evaluated by a functional test in a manner similar to that Used in Example 1. The results are shown in Table 5 below.

**Table 5:**

| Results of Functional Test | | |
|---|---|---|
| Evaluation Items | Sample | |
| | TGase added | TGase not added (control 1) |
| Hardness of tart base | 1.5 | 0.3 |
| Crispiness of tart base | 1.5 | -0.2 |
| Favorable texture in a whole | 1.4 | 0.4 |
| Favorable flavor | 1.1 | 0.8 |
| Favorable appearance | 1.2 | 1.2 |

### Standards of evaluation:

- 2:: strong or favorable
- 1:: slightly strong or slightly favorable
- 0:: ordinary
- -1:: slightly weak or slightly unfavorable
- -2:: weak or unfavorable

As the table shows, the tart with addition of TGase was crispy and retained crispiness after time had passed. In the control product, a part in contact with cream became soggy and it lost crispiness as a whole. It is clear that the addition of TGase improves organoleptical property and thus the tart thus obtained is accepted favorably.

### Example 4: Danish Pastry (Baked product with a multilayered structure)

The composition of the dough is shown in Table 6 below.

**Table 6:**

| Composition of Dough | |
|---|---|
| Flour (medium) | 1,000 parts |
| Sugar | 80 parts |
| Salt | 12 parts |
| Skim milk powder | 20 parts |
| Butter (without salt) | 80 parts |
| Whole egg | 250 parts |
| yeast | 60 parts |
| Water | 400 parts |
| | |
| Roll-in margarine Custard cream, Canned fruits, etc. | 1,000 parts |

The flour for starting material mentioned above and TGase (enzyme preparation powder) at 0.5 U/g flour protein for starting material were mixed and sieved. All ingredients except roll-in margarine were placed in a dough-mixer and mixed at a low speed for 2 minutes and at a medium speed for 3 minutes. The kneaded dough was formed into a ball and was left to rise in a refrigerator at 5°C for 12-18 hours. After completion of fermentation, the dough and roll-in margarine were sheeted and the fat was enclosed with the dough. It was rolled out to a rectangle with about 5 mm thickness, folded into 3 layers, and left to rest in a freezer at -20°C for about 30 minutes. The procedure was further repeated twice to obtain a dough with 27 (3 × 3 × 3) layers. The dough was left to rest in the refrigerator for 30 minute, spread into 3 mm thickness, and cut and shaped into a desired danish pastry form. They were subjected to final proof, i.e. final fermentation, in a proofer at 30°C for about 30 minutes. After loading custard cream, fruits, etc., they were baked at 210°C for about 15 minutes. As a control, dough was prepared without addition of TGase, from which products were made.

The appearance of the danish pastries for TGase-added products was superior to the control products with large lift of layers. The texture was also more favorable for the TGase-added products than the control products, with rich crispy and flaky feeling.

Furthermore, the TGase-added dough had a lower tendency of being softened in repeated folding operations and the dough was less frequently broken to ooze roll-in margarine out and more easily to be handled during a manufacturing process of dough for danish pastries. The duration of resting period between folding operations tended to be shortened.

### Advantages of the Invention

The present invention enables manufacturing crispy and flaky products which becomes less frequently soggy after loaded with filling materials containing water such as creams and fruits and prevents softening of the dough in the course of manufacturing so that operations are conducted conveniently by providing a very simple step in which TGase is added to dough mainly comprising flour and allowed to exert its action during a process of manufacturing baked products mainly comprising flour which contain fat to give a dough with a multilayered or porous structure as shown above. Particularly, multilayered baked products with improved ,potential lift and superior appearance can be obtained.

## Claims

1. A method of manufacturing baked products with a multilayered structure, which comprises forming a composite, in which dough layers mainly comprising flour and separation layers mainly comprising fats and oils are laminated, and subsequent heat treatment of the laminated composite, **characterized in that** transglutaminase is added to the flour dough and allowed to exert its action on the dough, before said heat treatment.

2. A method of manufacturing baked products with a porous structure, which comprises producing a composite in which finely divided fat is mixed into dough mainly comprising flour, and subsequent heat treatment of the composite, **characterized in that** transglutaminase is added to the flour dough and allowed to exert its action on the dough before said heat treatment.

3. A method according to Claim 1 or 2, **characterized in that** the flour dough contains yeast.

4. A method according to any of the Claims 1 to 3, wherein the baked products are pie pastries.

## Patentansprüche

1. Verfahren zur Herstellung von Backprodukten mit einer Mehrschichtstruktur, welches das Bilden eines Verbundstoffs, worin Teigschichten, die hauptsächlich aus Mehl bestehen, und Trennschichten, die hauptsächlich aus Fetten und Ölen bestehen, geschichtet sind, und eine nachfolgende Hitzebehandlung des geschichteten Verbundstoffs umfaßt, **dadurch gekennzeichnet, daß** Transglutaminase zu dem Mehlteig gegeben wird und sie vor der Hitzebehandlung auf den Teig wirken kann.

2. Verfahren zur Herstellung von Backprodukten mit einer porösen Struktur, welches das Herstellen eines Verbundstoffs, worin fein verteiltes Fett in Teig, der hauptsächlich Mehl enthält, eingemischt wird, und danach das Hitzebehandeln des Verbundstoffs umfaßt, **dadurch gekennzeichnet, daß** Transglutaminase zu dem Mehlteig gegeben wird und sie vor der Hitzebehandlung auf den Teig wirken kann.

3. Verfahren nach Anspruch 1 oder 2, **dadurch gekennzeichnet, daß** der Mehlteig Hefe enthält.

4. Verfahren nach einem der Ansprüche 1 bis 3, wobei die Backprodukte Kuchen sind.

## Revendications

1. Méthode de fabrication de produits de boulangerie et pâtisserie avec une structure en plusieurs couches, comprenant la formation d'un composite, dans lequel des couches de pâte comprenant principalement de la farine et des couches de séparation comprenant principalement des matières grasses et des huiles sont superposées, et un traitement thermique ultérieur du composite stratifié, **caractérisée en ce que** l'on ajoute de la transglutaminase à la pâte de farine et **en ce qu'**on la laisse exercer son action sur la pâte avant ledit traitement thermique.

2. Méthode de fabrication de produits de boulangerie et pâtisserie avec une structure poreuse, comprenant la production d'un composite, dans lequel une matière grasse finement divisée est mélangée dans la pâte comprenant principalement de la farine, et un traitement thermique ultérieur du composite, **caractérisée en ce que** l'on ajoute de la transglutaminase à la pâte de farine et **en ce qu'**on la laisse exercer son action sur la pâte avant ledit traitement thermique.

3. Méthode selon la revendication 1 ou 2, **caractérisée en ce que** la pâte de farine contient de la levure.

4. Méthode selon l'une quelconque des revendications 1 à 3, dans laquelle les produits de boulangerie et pâtisserie sont des tourtes.
